# EUROPEAN PATENT SPECIFICATION

(11) **EP 4 025 424 B1**
(45) Date of publication and mention of the grant of the patent: **27.09.2023**
(21) Application number: 20767765.9
(22) Date of filing: 03.09.2020
(51) Int. Cl.: C09J 7/30, B32B 29/00, B32B 27/08, B32B 27/10, B32B 27/16, B32B 27/32, B32B 27/12, B32B 7/12, C09D 175/04, C09J 175/04

(54) **WATER-BASED BARRIER ADHESIVE**
WÄSSRIGER BARRIERE-KLEBSTOFF
ADHESIF AQUEUX BARRIÈRE

(30) Priority: 03.09.2019 SG 10201908115Y
(43) Date of publication of application: 13.07.2022
(73) Proprietor: Thai Polyethylene Co., Ltd., 10800 Bangkok (TH)
(72) Inventor: NERANON, Kitjanit, 21130 Rayong (TH); SAENDEE, Phutsadee, 92130 Trang (TH); PORNSUNTHORNTAWEE, Orathai, 10260 Bangkok (TH); JARUMANEEROJ, Chatchai, 10600 Bangkok (TH); CHEEVASRIRUNGRUANG, Watcharee, 90110 Songkhla (TH)
(74) Representative: Erbacher, Martin
(86) International application number: PCT/EP2020/074526
(87) International publication number: WO 2021/043860

(56) References cited:
- JP-A- 2003 213 205
- US-A1- 2016 040 035
- US-A1- 2016 237 308
- US-A1- 2017 057 209
- US-B2- 9 657 195
- DATABASE WPI Week 201910 Thomson Scientific, London, GB; AN 2019-01577X XP002800975, & CN 109 082 258 A (HEFEI SCISKY TECHNOLOGY CO LTD) 25 December 2018 (2018-12-25)

## Description

### FIELD OF THE INVENTION

This invention relates to a water-based barrier adhesive; a method for preparing the same; and the use thereof.

### BACKGROUND OF THE INVENTION

Barrier films are important in the food packaging applications for preserving and extending the shelf-life of food products. Respective barrier films can be single layered or multilayered. The performance of the barrier strongly depends on the oxygen transmission rate and the water vapor transmission rate. The film materials and structural design depends on the desired barrier performance for that specific application and product types.

WO 2019/060026 At discloses laminate film structures including an adhesive layer having gas and moisture barrier properties. The disclosed laminate film structures comprise films bonded together with an adhesive composition, the adhesive composition having barrier properties, e.g., controlling oxygen and/or water vapor transmission rates. However, the oxygen transmission rate of these laminate films is too high for a variety of applications.

US 2016/0040035 A1 discloses an aqueous coating agent comprising (A) an aqueous polyurethane resin containing a polyurethane resin having an acid group and a polyamine compound, (B) a water-soluble polymer, and (C) an inorganic layered mineral as main constituents, wherein solid formulation ratios of the aqueous polyurethane resin (A), the water-soluble polymer (B) and the inorganic layered mineral (C) occupied in a total solid content of the aqueous coating agent are within approximate ranges indicated below. Aqueous polyurethane resin (A): 5 to 60 mass % Water-soluble resin (B): 25 to 80 mass % Inorganic layered compound (C): 8 to 20 mass %. However, these materials show an oxygen transmission rate which is too high for a variety of applications.

US 2016//0237308 A1 discloses gas barrier films and corresponding laminates with good oxygen gas barrier properties and laminate strength. Said films are prepared from aqueous compositions containing a polyester-based polyurethane dispersion and polyvinyl alcohol resin as the water-soluble polymer component in a weight ratio from 5:1 to 1:30, additives and water-miscible solvents.

However, materials known from the prior art suffer from insufficient barrier performance, long term adhesion strength (adhesion stability), product shelf life and recyclability.

There is, therefore, still a need for barrier films and compositions for preparing the same, in particular for use in food packaging applications, having improved properties.

It is, therefore, the object of the present invention to provide barrier films overcoming drawbacks of the prior art, in particular with respect to oxygen transmission rate and water vapor transmission rate thereof.

This object is achieved by a water-based barrier adhesive comprising: a polyurethane; at least one water-soluble polymer, wherein the water-soluble polymer comprises at least one hydroxyl group; and water, according to claim 1.

The "water-based barrier adhesive" coating composition may be termed herein as a coating composition for coating a substrate to provide adhesive and/or barrier properties. The coating composition (water-based barrier adhesive) may comprise polyurethane and one or more water-soluble polymers.

The term "barrier adhesive" as used herein shall encompass, in general, any barrier coating and is not limited to adhesives only.

The present invention provides a coating composition (water-based barrier adhesive) that can be used as an adhesive and/or as a barrier. The coating composition is an aqueous composition. That is to say, it may be applied in the form of an aqueous solution onto a substrate and subsequently dried to form a layer that adheres to the surface of the substrate and acts as a barrier simultaneously. The layer may comprise water or a substantial amount of water.

The coating composition can be used to form a barrier film, preferably a laminate film. The coated composition can be coated onto a substrate, and then, optionally, be covered with a laminated layer to form the laminate film, such that the coating composition is disposed between the substrate and the laminated layer.

The water-based barrier adhesive comprises a polyurethane as specified in claim 1; one or more water-soluble polymers, wherein the one or more water-soluble polymers comprise a -OH (hydroxyl) group; and water.

The composition may further comprise, optionally, one or more additives, preferably selected from including deforming agents, dispersing agents, tackifiers, surfactants, plasticizers, wetting agents, thickeners, biocides, antioxidants, cross linkers, hardeners, and adhesion promoters, etc. or mixtures thereof. The composition may comprise the at least one additive in an amount from 0.1 to 10 wt% with respect to the total weight of the water-based barrier adhesive.

The water-based barrier adhesive may comprise the polyurethane in an amount from 1 to 30 wt% , preferably from 1 to 20 wt%, more preferred 1 to 10 wt%, even more preferred 2 to 8 wt%, most preferred 3 to 6 wt9b, with respect to the total weight of the water-based barrier adhesive.

The water-based barrier adhesive may comprise the at least one water-soluble polymer in an amount from 5 to 60 wt%, preferably 5 to 40 wt%, preferably 5 to 30 wt%, preferably 5 to 20 wt%, preferably 5 to 15 wt%, preferably 7 to 12 wt%, with respect to the total weight of the water-based barrier adhesive.

The water-based barrier adhesive may comprise the water in an amount from 40 to 94 wt%, preferably 50 to 94 wt%, preferably 70 to 94 wt%, preferably 80 to 95 wt%, preferably 85 to 95 wt%, preferably 80 to 90 wt%, with respect to the total weight of the water-based barrier adhesive.

The water-based barrier adhesive may consist of the polyurethane, the at least one water-soluble polymer, and the water. The amounts of all constituents of the water-based barrier adhesive adds up to 100 wt%. In the entire disclosure, "comprising" may preferably be "consisting of".

The polyurethane and the at least one water-soluble polymer may be contained in the water-based barrier adhesive in a weight ratio from 5:1 to 1:30, preferably 2:1 to 1:20, preferably 1:1 to 1:10, preferably 1:1 to 1:5, preferably 1:1 to 1:3.

The polyurethane may be a solid comprising 5 to 50 wt% of the water with respect to the total weight of the polyurethane. The polyurethane may be polyurethane in a dispersion in water (aqueous dispersion; polyurethane dispersion). Preferably, polyurethane dispersion has solid content in the range of 20-50 wt%, preferably 25-40 and preferably 30-35 wt% with respect to the total weight of the dispersion. In other words, polyurethane may be present as a solid in the water in an amount of 20-50 wt%, preferably 25-40 and preferably 30-35 wt%, with respect to the total weight of the solid.

The polyurethane may be an aliphatic polyurethane, obtained from (A) polyether polyol(s) and aliphatic polyester polyol(s); and (B) aliphatic diisocyanate(s), preferably hexamethylene diisocyanate (HDI), pentametylene diisocyanate (PDI), isophorone diisocyanate (IPDI), methylene bis (4-cyclohexylisocyanate) (HMDI), 2,2,4-trimethyl hexamethylene diisocyanate (TMDI) and a combination thereof.

The polyurethane may comprise aliphatic polyether urethane and comprises aliphatic polyester urethane. Preferably the polyurethane comprises polyether urethane as a majority and aliphatic polyester urethane as a minority. The ratio of aliphatic polyether and aliphatic polyester urethane may be in the range of 1:1 to 5:1, preferably 1.2:1 to 3:1, more preferably 1.5:1 to 2:1.

The aliphatic polyurethane has preferably a number average molecular weight (Mn) of about 30,000 to 80,000 g/mol, and/or a weight average molecular weight (Mw) about 40,000 to 90,000 g/mol, and/or a Z-average molecular weight (Mz) of about 45,000 to 95,000 g/mol. The polyurethane preferably has polydispersity index about 1 to 3, preferably 1 to 2, more preferably in the range of 1 to 1.25,

The polyurethane dispersion may have a solution viscosity in range of 1 to 300 mPas, preferably 20 to 500 mPas, preferably 30 to 500 mPas preferably 30 to 200 mPas, more preferably 50 to 200 mPas.

The average particle size (= particle diameter of the polyurethane particles in the aqueous dispersion)is in a range of 10 nm to 500 nm, preferably 20 to 250 nm, preferably 50 to 200 nm, preferably 100 nm to 200 nm.

The water-soluble polymer may be selected from the group consisting of polyvinyl alcohol, poly(ethylene vinyl alcohol), polyvinyl acetate, polyethylene vinyl acetate), cellulose acetate, and mixtures thereof.

The water-soluble polymer may have a degree of hydrolysis from 70 to 100%, with respect to the total number of hydrolysable groups in the water-soluble polymer.

The water-soluble polymer may have a weight average molecular weight from 500 to 50,000 g/mol, preferably 20,000 to 40,000 g/mol.

The water-based barrier adhesive may further comprise a water-miscible solvents. The water-based barrier adhesive may comprise the water-miscible solvent in an amount of 0.1-50 wt%, preferably 0.1-30 wt%, more preferably 10-20 wt%, with respect to the total weight of the water-based barrier adhesive. The water-miscible solvent may selected from the group consisting of methanol, ethanol, propanol, butanol and a mixture thereof.

The object is further achieved by a barrier film comprising a substrate and a barrier adhesive layer coated on at least on surface of the substrate, wherein the barrier adhesive comprises the water-based barrier adhesive as defined herein. According to one embodiments there is provided a barrier film comprising a substrate and a barrier adhesive layer coated on at least on surface of the substrate, wherein the barrier adhesive consists of the water-based barrier adhesive as defined. According to one embodiments there is provided a barrier film comprising a substrate and a barrier adhesive layer coated on at least on surface of the substrate, wherein the barrier adhesive layer is obtainable by coating the water-based barrier adhesive on the substrate. The water-based barrier adhesive is coated on the surface of the substrate to form a barrier layer adhered to the surface. Barrier adhesive layer may be obtained by coating the water-based barrier adhesive one time or multiple times on the surface of the substrate (respectively the coating layer obtained in the foregoing coating).

The barrier adhesive layer coated on the substrate has a thickness of 0.1-10 µm (e.g. 1-10 µm, 1-5 µm, 1-2 µm).

The water-based barrier adhesive may be coated on the surface in an amount of 0.1-5 g/m², preferably 1-3 g/m², more preferably 1.5-2.5 g/m².

The barrier film may further comprise a laminate layer adjacent to the barrier adhesive layer, wherein the barrier adhesive layer is arranged between the laminate layer and the substrate.

The substrate may be polymers e.g. polyolefins, PET, nylon or paper-based substrate. Preferably, the substrate is polyolefins, for example polyethylene and polypropylene based substrates. The substrate may be machine direction oriented or biaxially oriented polyolefins. The substrate may be coated with metal oxide layer e.g aluminum oxide or silicone oxide.The substrate may be treated with corona to enhance the hydrophilicity of the substrate before application of the barrier adhesive or coating. The substrate may comprise, preferably consist of polyethylene, polypropylene or paper.

The laminate layer may comprise, preferably consist of polyethylene, polypropylene or paper based.

The object is further achieved by a method of producing a water-based barrier adhesive as defined herein, the method comprising: providing an aqueous solution comprising the at least one water-soluble polymer; and mixing the aqueous solution with polyurethane.

The providing of the aqueous solution may comprise dissolving the water-soluble polymer in water. The dissolving of the water-soluble polymer in water may be carried out at a temperature ranging from 50°C to 150°C. The water-soluble polymer may be dissolved in the water in an amount of 1 wt% to 30 wt%, with respect to the total amount of the aqueous solution. The method may further comprise cooling down the temperature of the aqueous solution after dissolving the one or more water-soluble polymers in the water.

The water-soluble polymer used in the method may be selected from the group consisting of polyvinyl alcohol, polyethylene vinyl alcohol), polyvinyl acetate, poly(ethylene vinyl acetate), cellulose acetate, and mixtures thereof. The water-soluble polymer used in the method may have a degree of hydrolysis from 70 to 100%, with respect to the total number of hydrolysable groups in the water-soluble polymer. The water-soluble polymer used in the method may have a weight average molecular weight from 500 to 50,000 g/mol, preferably 20,000 to 40,000 g/mol.

The water-based barrier adhesive may further comprise a water-miscible solvents. The water-based barrier adhesive may comprise the water-miscible solvent in an amount of 0.1-50 wt%, preferably 0.1-30 wt%, more preferably 10-20 wt%, with respect to the total weight of the water-based barrier adhesive. The water-miscible solvent may selected from the group consisting of methanol, ethanol, propanol, butanol and a mixture thereof.

In the inventive method, mixing the aqueous solution with the polyurethane may comprises adding the polyurethane to the aqueous solution over a duration of at least 5 minutes.

Adding the polyurethane to the aqueous solution may be carried out at a temperature ranging from 25°C to 40°C.

The weight ratio of the polyurethane and the water-soluble polymer may be from 5:1 to 1:30.

Finally, the object is achieved be the use of the water-based barrier adhesive as a barrier adhesive layer in a packaging, preferably food packaging.

### ADVANTAGEOUS EFFECTS

It was surprisingly found by the inventors that a water-based barrier adhesive in accordance with the present disclosure can be used as a barrier adhesive, in particular in food packaging, and is helpful in this regard to improve the barrier properties, in particular with respect to oxygen transmission rate (OTR) and water vapor transmission rate (WVTR).

It was a further found by the inventors that the above advantages barrier properties combine with good film appearance and adhesion properties.

Another advantage is that the inventive water-based barrier adhesive combines improved barrier performance with recyclability.

Recently, as recyclable trend, there is an attempt to develop mono-materials for packaging in particularly flexible packaging e.g. multilayer films for packaging with at least about 70% monomaterial (i.e. recyclable component), prefer at least 90% monomaterial (i.e. recyclable component)), depending on the design of total film thickness and the coating weight or coating thickness of the non-recyclable composition. The inventive water-based barrier adhesive allows to prepare laminated films comprising >95% monomaterial (i.e. recyclable component) with good barrier properties.

### DETAILED DESCRIPTION

### Materials

Polyurethane dispersion (PUD) has solid content of 32-35 wt%. Polyurethane consists of aliphatic polyether urethane and aliphatic polyester urethane with weight molecular weight of about 40,000 to 90,000 g/mol. The respective material used in the below examples was purchased from the DSM Coating Resins under the trade name of NeoRez^{™} and the Henkel Company under the trade name of LOCTITE^{™}.

Polyvinyl alcohol (PVA) has a weight average molecular weight of 20,000 to 40,000 g/mol and a degree of hydrolysis of 96. The respective material used in the below examples was purchased from the FUJIFILM Wako Pure Chemical Corporation under the trade name of FujiFilm Wako^{™}, the Kuraray Company under the trade name of Poval^{™} and Exceval^{™}, the Mitsubishi Chemical Corporation under the trade name of GOHSENOL and the DENKA Company under the trade name of DENKA POVAL.

Poly(acrylic acid) (PAA) has an viscosity average molecular weight (Mv) of 300,000 to 500,000 Daltaon, Brookfield viscosity of 100 to 3,000 cP and glass transition temperature of 100 to 110 degree Celsius. The respective material used in the below examples was purchased from the Sigma Aldrich company.

### Measurement methods

### Particle size

Particle size (= particle diameter) and specific surface area were measured by Zetasizer Nanoseries model S4700 (Malvern Instrument, UK) with dilution of sample in deionized water at concentration ca. 0.001 to 0.003 wt%, dispersant refractive index 1.33 and particle refractive index 1.56.

### Viscosity

Solution viscosity was measured by Brookfield viscometer at 25 °C with needle NO. 18, torque value more than 90% and speed 14-30 rpm.

### Molecular weight

The number average molecular weight (Mn), the weight average molecular weight (Mw), and The Z-average molecular weight (Mz) were evaluated by Gel Permeation Chromatography (GPC) using THF system, flow rate 1.00 mL/min, injection value 100 µL, detector temperature 35 °C, column temperature 35 °C, and sample concentration 1.999, 4.001, 5.999 mg/mL.

### Oxygen transmission rate

The oxygen transmission rate (OTR) (cc/m2/day) was measured at the temperature of 23 °C and 0 %relative humidity (%RH) using an oxygen transmission rate analyser (OX-TRAN^{®}, 2/21 MT) according to ASTM D3985.

### Water vapor transmission rate

The water vapor transmission rate (WVTR) (g/m2/day) was measured at the temperature of 38 °C and 90 96RH using a water vapor permeation analyser (Systech Illinois, 7002) according to ASTM F1249.

### Initial tack by tape

The initial tack was determined by the tape test according to ASTM F 2296. Briefly, the transparent tape was placed on the coated film. After ensuring a good contact between the tape and the coated film, the tape was removed rapidly by hand. The removed tape and the coated film was then visually inspected.

### Adhesion strength

The adhesion strength (N/15 mm) was measured with a universal testing machine (UTM) at an applied load of 100 N and a peeling speed of 254 mm/min. The sample width was fixed constant at 15 mm.

### Film Appearance

The film appearance was visually observed and also analyzed under scanning electron microscope (SEM).

### Preparation of the water-based barrier adhesive

### Comparative example 1

PVA solution was prepared by dissolving PVA in water at temperature of 90-95 °C. Then it was cooled down to at ambient temperature with stir speed about 300 to 800 rpm under ambient atmosphere for about 1 to 2 hours.

### Comparative example 2

PAA solution was prepared by dissolving PAA in water at temperature of 90-95 °C. Then it was cooled down to at ambient temperature with stir speed about 300 to 800 rpm under ambient atmosphere for about 1 to 2 hours.

### Comparative example 3

The PVA solution and PAA solution prepared in comparative example 1 and 2 was mixed at part ratio shown in Table 1.

### Examples 4, 5, 6 and 7

PVA solution was prepared by dissolving PVA in water or water-methanol mixing at temperature of 90-95 °C. Then it was cooled down to at ambient temperature with stir speed about 300 to 800 rpm under ambient atmosphere for about 1 to 2 hours.

PUD was slowly added into PVA for about 10 to 30 mins and then kept continuously stirring from 3-5 hours until uniform PUD-PVA solution was obtained.

The ratio of PVA and PUD are shown in Table 1 as part ratio.

### Film preparation

### Sample 1a to 7a

Biaxially oriented polypropylene (BOPP) commercially available at thickness of about 20 µm were coated with the barrier adhesive prepared as mentioned above using a versatile coating machine (VCML, RK Printcoat Instruments) at the coating weight of less than 3.0 gsm or thickness of about 1-2 µm.

Comparative sample 1a, 2a, 3a, 4a,5a, 6a and 7a are prepared by using Comparative sample 1, 2, 3, 4,5, 6 and 7 respectively.

### Sample 5b, 5c and 5d.

The sample 5a was then laminated with cast polypropylyne (cPP) film having thickness 40 µm, linear low density polyethylene (LLDPE) having thickness of 80 µm, or BOPP film having thickness 20 80 µm. The adhesive curing was done by keeping the laminated film at the temperature of 50 °C for at least 24 h.

From Table 1, it can be seen Sample 4 to 7 show much better OTR value than all comparative examples 1 to 3. In addition when PVA content is increased that relative to the reducing of PU content, the OTR value tends to evidently increase as shown in Sample 4 and 5. However, with too much increasing of PVA content leads to reduce of initial tack and adhesion strength of barrier adhesive or coating on that coated film substrate as shown in Sample 5 and 6. Besides, the adhesive compositions and barrier film performance of semi-water based barrier adhesive is shown in Sample 7, which is design to improve the drying performance of adhesive solution during lamination or coating processes and residual carrier solvent on the barrier film with remaining in the barrier property compared with our original water based barrier adhesive.

| **Table 1:** The varied compositions, properties and comparative sample are shown in Table **1.Compositio n** | **Unit** | **Comparative Sample 1** | **Comparative Sample 2** | **Comparative Sample 3** | **Sample 4** | **Sample 5** | **Sample 6** | **Sample 7** |
|---|---|---|---|---|---|---|---|---|
| PU | Part | - | - | - | 1 | 1 | 1 | 1 |
| PAA | Part | 1 | | 1 | - | - | - | - |
| PVA | Part | - | 1 | 2.22 | 0.09 | 4.54 | 13.64 | 4·54 |
| Water | Part | 9 | 9 | 21.22 | 2.54 | 27.79 | 79.30 | 20.06 |
| Methanol | Part | - | - | - | - | - | - | 7.73 |

| **Barrier Film** | | **Comparative Sample 1a** | **Comparative Sample 2a** | **Comparative Sample 3a** | **Sample 4a** | **Sample 5a** | **Sample 6a** | **Sample 7a** |
|---|---|---|---|---|---|---|---|---|
| Film structure* | | BOPP (20 um) | BOPP (20 um) | BOPP (20 um) | BOPP (20 um) | BOPP (20 um) | BOPP (20 um) | BOPP (20 um) |
| OTR | cc/m 2/day | >2,000 | >2,000 | >2,000 | 209-251 | <0.1 | <0.1 | 1-30 |
| WVTR | g/m2 /day | 6.63-8.32 | 7.07-7.16 | 6.89-7.22 | 7.69-7.89 | 6.16-6.29 | 6.43-6.52 | 6.39-6.80 |
| Initial tack by tape** | | AF | MF | AF | MF | MF | AF | MF |
| Adhesion | (N/15 mm) | n/d | n/d | n/d | n/d | n/d | n/d | n/d |
| *Film* appearance | | Hazy | Clear | Hazy | Clear | Clear | Clear | Clear |

| | | | | | | | | |
|---|---|---|---|---|---|---|---|---|
| ^{∗}Film references of BOPP (aoum) and CPP (40um) have a value of ≥2,000 cc/m2/day in the OTR and 8 to 11 g/m2/day in the WVTR **MF is material failure/film (substrate) tearing that means it can reach to the maximum adhesion on that coated film, AF is adhesion failure/delamination that means adhesion of that adhesive or coating has not sufficient adhesive strength on that coated film substrate and it need to improve as being the adhesive function. | | | | | | | | |

**Table 2: The properties of laminated films with different film structures are shown in Table 2.**

| ***Film* Properties** | **Laminated *Film*** | | |
|---|---|---|---|
| | **PP** | **PE** | |
| | Sample 5b | Sample 5c | Sample 5d |
| *Film* structure | BOPP (20 µm)//cPP (40 µm) | BOPE (30 µm)//LLDPE (80 µm) | BOPE (30 µm)//LLDPE (80 µm) |
| Coated thickness (µm) | ~1-2 | ~1-2 | ~2-3 |
| Coating weight (gsm) | 1.2-1.5 | 1.2-1.4 | 2.2-2.4 |
| OTR (cc/m²/day) | <0.1 | <0.1 | <0.1 |
| WVTR (g/m²/day) | 2.3-3.6 | 3.1-3.3 | 2-4 |
| Adhesion (N/15 mm) | 3-4 | 3-4 | 3-4 |
| Failure mode | MF | MF | MF |
| *Film* appearance | Clear | Clear | Clear |

| | | | |
|---|---|---|---|
| ***MF is material failure/film tearing, AF is adhesion failure/delamination | | | |

Table 2 shows that the laminated film samples 5b, 5c and 5d provide excellent OTR and WVTR values. In addition, these structure comprise more than 90% polyolefin which provides recyclability and makes the materials suitable for packaging especially food packaging.

The features disclosed in the foregoing description and in the dependent claims may, both separately and in any combination thereof, be material for realizing the aspects of the disclosure made in the independent claims, in diverse forms thereof.

## Claims

1. A water-based barrier adhesive comprising:
a polyurethane;
at least one water-soluble polymer, wherein the water-soluble polymer comprises at least one hydroxyl group; and
water; wherein the polyurethane comprises a polyether urethane and an aliphatic polyester urethane.

2. The water-based barrier adhesive according to claim 1, wherein the water-based barrier adhesive comprises the polyurethane in an amount from 1 to 30 wt, with respect to the total weight of the water-based barrier adhesive.

3. The water-based barrier adhesive according to claim 1 or 2, wherein the water-based barrier adhesive comprises the at least one water-soluble polymer in an amount from 5 to 60 wt% with respect to the total weight of the water-based barrier adhesive.

4. The water-based barrier adhesive according to claim any of the preceding claims, further comprising at least one additive, preferably in an amount from 0.1 to 10 wt% with respect to the total weight of the water-based barrier adhesive.

5. The water-based barrier adhesive according to any of the preceding claims, wherein the polyurethane and the at least one water-soluble polymer are contained in the water-based barrier adhesive in a weight ratio from 5:1 to 1:30.

6. The water-based barrier adhesive according to any of the preceding claims, wherein the water-soluble polymer is selected from the group consisting of polyvinyl alcohol, polyethylene vinyl alcohol), polyvinyl acetate, poly(ethylene vinyl acetate), cellulose acetate, and mixtures thereof.

7. The water-based barrier adhesive according to any of the preceding claims, wherein the water-based barrier adhesive further comprises a water-miscible solvents.

8. A barrier film comprising a substrate and a barrier adhesive layer coated on at least on surface of the substrate, wherein the barrier adhesive layer comprises the water-based barrier adhesive according to any of the preceding claims.

9. The barrier film according to claim 8, wherein the barrier adhesive layer coated on the substrate has a thickness of 0.1-10 µm.

10. The barrier film according to claim 8 or 9 wherein the water-based barrier adhesive is coated on the surface in an amount of 0.1-5 g/m².

11. The barrier film according to any of the claims 8 to 10 further comprising a laminate layer adjacent to the barrier adhesive layer, wherein the barrier adhesive layer is arranged between the laminate layer and the substrate.

12. The barrier film according to any of the claims 8 to 11, wherein the substrate and /or the laminate layer comprises polyethylene, polypropylene or paper.

13. A method of producing a water-based barrier adhesive according to any of the claims 1 to 7, the method comprising:
- providing an aqueous solution comprising the at least one water-soluble polymer; and
- mixing the aqueous solution with polyurethane.

14. Use of the water-based barrier adhesive according to any of the claims 1 to 7 as a barrier adhesive layer in a packaging, preferably food packaging.

## Patentansprüche

1. Wasserbasierter Barriereklebstoff, umfassend:
ein Polyurethan;
mindestens ein wasserlösliches Polymer, wobei das wasserlösliche Polymer mindestens eine Hydroxylgruppe umfasst; und
Wasser; wobei das Polyurethan ein Polyetherurethan und ein aliphatisches Polyesterurethan umfasst.

2. Wasserbasierter Barriereklebstoff nach Anspruch 1, wobei der wasserbasierte Barriereklebstoff das Polyurethan in einer Menge von 1 bis 30 Gew.-%, bezogen auf das Gesamtgewicht des wasserbasierten Barriereklebstoffs, umfasst.

3. Wasserbasierter Barriereklebstoff nach Anspruch 1 oder 2, wobei der wasserbasierte Barriereklebstoff das mindestens eine wasserlösliche Polymer in einer Menge von 5 bis 60 Gew.-%, bezogen auf das Gesamtgewicht des wasserbasierten Barriereklebstoffs, umfasst.

4. Wasserbasierter Barriereklebstoff nach einem der vorstehenden Ansprüche, ferner umfassend mindestens ein Additiv, vorzugsweise in einer Menge von 0,1 bis 10 Gew.-%, bezogen auf das Gesamtgewicht des wasserbasierten Barriereklebstoffs.

5. Wasserbasierter Barriereklebstoff nach einem der vorstehenden Ansprüche, wobei das Polyurethan und das mindestens eine wasserlösliche Polymer in einem Gewichtsverhältnis von 5:1 bis 1:30 im wasserbasierten Barriereklebstoff enthalten sind.

6. Wasserbasierter Barriereklebstoff nach einem der vorstehenden Ansprüche, wobei das wasserlösliche Polymer ausgewählt ist aus der Gruppe bestehend aus Polyvinylalkohol, Poly(ethylenvinylalkohol), Polyvinylacetat, Poly(ethylenvinylacetat), Celluloseacetat und Mischungen davon.

7. Wasserbasierter Barriereklebstoff nach einem der vorstehenden Ansprüche, wobei der wasserbasierte Barriereklebstoff ferner ein wassermischbares Lösungsmittel umfasst.

8. Barrierefolie, umfassend ein Substrat und eine Barriereklebstoffschicht, die auf mindestens eine Oberfläche des Substrats aufgetragen ist, wobei die Barriereklebstoffschicht den wasserbasierten Barriereklebstoff nach einem der vorstehenden Ansprüche umfasst.

9. Barrierefolie nach Anspruch 8, wobei die auf das Substrat aufgetragene Barriereklebstoffschicht eine Dicke von 0,1-10 µm aufweist.

10. Barrierefolie nach Anspruch 8 oder 9, wobei der wasserbasierte Barriereklebstoff in einer Menge von 0,1-5 g/m² auf die Oberfläche aufgetragen ist.

11. Barrierefolie nach einem der Ansprüche 8 bis 10, ferner umfassend eine Laminatschicht neben der Barriereklebstoffschicht, wobei die Barriereklebstoffschicht zwischen der Laminatschicht und dem Substrat angeordnet ist.

12. Barrierefolie nach einem der Ansprüche 8 bis 11, wobei das Substrat und/oder die Laminatschicht Polyethylen, Polypropylen oder Papier umfasst.

13. Verfahren zur Herstellung eines wasserbasierten Barriereklebstoffs nach einem der Ansprüche 1 bis 7, wobei das Verfahren umfasst:
- Bereitstellen einer wässrigen Lösung, die das mindestens eine wasserlösliche Polymer umfasst; und
- Mischen der wässrigen Lösung mit Polyurethan.

14. Verwendung des wasserbasierten Barriereklebstoffs nach einem der Ansprüche 1 bis 7 als Barriereklebstoffschicht in einer Verpackung, vorzugsweise Lebensmittelverpackung.

## Revendications

1. Adhésif barrière à base d'eau comprenant :
un polyuréthane ;
au moins un polymère hydrosoluble, le polymère hydrosoluble comprenant au moins un groupe hydroxyle ; et
de l'eau ; le polyuréthane comprenant un uréthane de polyéther et un uréthane de polyester aliphatique.

2. Adhésif barrière à base d'eau selon la revendication 1, l'adhésif barrière à base d'eau comprenant le polyuréthane dans une quantité comprise entre 1 et 30 en poids, relativement au poids total d'adhésif barrière à base d'eau.

3. Adhésif barrière à base d'eau selon la revendication 1 ou 2, l'adhésif barrière à base d'eau comprenant l'au moins un polymère hydrosoluble dans une quantité comprise entre 5 et 60 % en poids relativement au poids total d'adhésif barrière à base d'eau.

4. Adhésif barrière à base d'eau selon une quelconque des revendications précédentes, comprenant en outre un additif, de préférence dans une quantité comprise entre 0,1 et 10 % en poids relativement au poids total d'adhésif barrière à base d'eau.

5. Adhésif barrière à base d'eau selon une quelconque des revendications précédentes, le polyuréthane et l'au moins un polymère hydrosoluble étant contenus dans l'adhésif barrière à base d'eau dans un rapport en poids compris entre 5/1 et 1/30.

6. Adhésif barrière à base d'eau selon une quelconque des revendications précédentes, le polymère hydrosoluble étant sélectionné dans le groupe composé d'alcool polyvinylique, d'alcool vinylique de polyéthylène, d'acétate de polyvinyle, de polyéthylène vinylacétate, d'acétate de cellulose, et de mélanges de ces derniers.

7. Adhésif barrière à base d'eau selon une quelconque des revendications précédentes, la couche d'adhésif barrière à base d'eau comprenant en outre des solvants miscibles dans l'eau.

8. Film barrière comprenant un substrat et une couche d'adhésif barrière appliqué sur au moins une surface du substrat, la couche d'adhésif barrière comprenant l'adhésif barrière à base d'eau selon une quelconque des revendications précédentes.

9. Film barrière selon la revendication 8, la couche d'adhésif barrière appliquée sur le substrat mesurant de 0,1 à 10 µm d'épaisseur.

10. Film barrière selon la revendication 8 ou 9, l'adhésif barrière à base d'eau étant appliqué sur la surface dans la mesure de 0,1 à 5 g/m².

11. Film barrière selon une quelconque des revendications 8 à 10, comprenant en outre une couche de stratifié adjacente à la couche d'adhésif barrière, la couche d'adhésif barrière étant agencée entre la couche de stratifié et le substrat.

12. Film barrière selon une quelconque des revendications 8 à 11, le substrat et/ou la couche de stratifié étant composée de polyéthylène, de polypropylène, ou de papier.

13. Procédé de production d'un adhésif barrière à base d'eau selon une quelconque des revendications 1 à 7, le procédé comprenant :
- la mise en place d'une solution aqueuse comprenant l'au moins un polymère hydrosoluble ; et
- le mélange de la solution aqueuse avec du polyuréthane.

14. Utilisation d'un adhésif barrière à base d'eau selon une quelconque des revendications 1 à 7, en tant que couche d'adhésif barrière dans un emballage, de préférence un emballage pour produits alimentaires.
